# NEUE EUROPÄISCHE PATENTSCHRIFT

(11) **EP 1 480 570 B2**
(45) Veröffentlichungstag und Bekanntmachung des Hinweises auf die Entscheidung über den Einspruch: **05.01.2011**
(45) Hinweis auf die Patenterteilung: 14.05.2008
(21) Anmeldenummer: 03717122.0
(22) Anmeldetag: 04.03.2003
(51) Int. Cl.: A61C 1/00

(54) **ZAHNÄRZTLICHES HANDINSTRUMENT**
DENTAL HAND INSTRUMENT
INSTRUMENT DENTAIRE A MAIN

(30) Priorität: 04.03.2002 DE 10209194; 12.03.2002 DE 10210777
(43) Veröffentlichungstag der Anmeldung: 01.12.2004
(73) Patentinhaber: Sirona Dental Systems GmbH, 64625 Bensheim (DE)
(72) Erfinder: HAIN, Johann, 64646 Heppenheim (DE); STEIN, Ulf, 64668 Rimbach (DE)
(74) Vertreter: Sommer, Peter
(86) Internationale Anmeldenummer: PCT/DE2003/000678
(87) Internationale Veröffentlichungsnummer: WO 2003/073952

(56) Entgegenhaltungen:
- EP-A- 0 727 190
- EP-A- 1 321 108
- WO-A-02/017811
- DE-A- 3 706 943
- DE-A- 4 211 233
- DE-A- 10 065 705
- DE-A- 19 909 407
- DE-C- 2 741 148
- GB-A- 2 072 779
- US-A- 4 753 595
- US-A- 5 538 425
- US-B1- 6 270 344

## Beschreibung

Die Erfindung bezieht sich auf ein zahnärztliches Handinstrument entsprechend dem Oberbegriff des Anspruches 1.

Aus der DE 44 17 810 A1 ist ein zahnärztliches Handstück bekannt, das eine Kupplungsvorrichtung für einen Antriebsmotor aufweist, bei welcher ein Anschlusskanal zu einem außenliegenden winkelförmigen hinteren Anschlussröhrchen führt. Daran ist ein außenliegender Schlauch befestigt, dessen anderes Ende an einem vorderen Anschlussröhrchen am Handstückkopf befestigt ist.

Aus der DE-199 09 407 A1 ist ein zahnärztliches Handinstrument bekannt bei dem eine Beleuchtungseinrichtung zur Ausleuchtung der Präparationsstelle sowie eine Bildübertragungseinrichtung mit einem Bildleiter vorgesehen ist. Die Beleuchtungseinrichtung umfaßt einen im Handinstrument angeordneten, bis zum Kopfteil geführten Lichtleiter, die Bildübertragungseinrichtung ein Lichtleitfaserbündel und einen Bildwandler in Form einer CCD- Kamera. Der Lichtleiter der Beleuchtungseinrichtung sowie die Leitungen, welche die Kühlmedien zur Kühlung der Präparationsstelle führen, sind im Inneren des Griffteils fest angeordnet. Bildleiter und CCD-Kamera der Bildübertragungseinrichtung sind an der Unterseite des Griffteils abnehmbar angeordnet. Zur Aufnahme des Bildleiters ist das Griffteil an seiner Unterseite mit einer Längsnut versehen. Die Längsnut geht im vorderen, dem Kopfteil zugewandten Bereich in einen Aufnahmekanal für den Bildleiter über. Die CCD-Kamera ist an der Außenseite des Anschlußstückes abnehmbar gehaltert. Zur Verwendung des Handinstruments ohne Bildleiter ist ein Blindteil vorgesehen welches anstelle des Bildleiters am Griffteil befestigbar ist, wobei das Blindteil im wesentlichen die gleichen Abmessungen aufweist wie der Bildleiter.

Bei dem bekannten Handinstrument ist es zwar möglich, zur Heißdampf-Autoklavierung den Bildleiter und die CCD-Kamera vom zu autoklavierenden Griffteil des Handinstruments abzunehmen, der zur Beleuchtung der Behandlungsstelle vorgesehene Lichtleiter sowie die gegebenenfalls noch vorhandenen, Medien führende Teile verbleiben dagegen fest im Griffteil des Handinstruments. Ein Austausch der Medien führenden Teile, beispielsweise eines Lichtleiters oder einer elektrischen Leitung ist nicht ohne Zerlegen des Handinstruments möglich. Ein weiterer Nachteil ist darin zu sehen, dass jede bezüglich der Medienführung vom Anwender gewünschte Variante eines Handstücktyps konstruktiv und fertigungstechnisch gesondert konzipiert sein muß.

Die EP 1 321 108 A1 beschreibt ein zahnärztliches Handinstrument mit einem Griffteil mit einer Anschlussarmatur zum Anschluss eines Versorgungsteils sowie eine zweite Funktionseinheit mit einem Medienträger für Licht, wobei die zweite Funktionseinheit zwecks Übertragung des Mediums an das Versorgungsteil anschließbar ist. Zum Abnehmen des zahnärztlichen Handinstruments von der Anschlussarmatur bzw. zum Trennen der Schnittstelle muss zunächst die zweite Funktionseinheit vom Versorgungsteil und damit auch von der ersten Funktionseinheit getrennt werden.

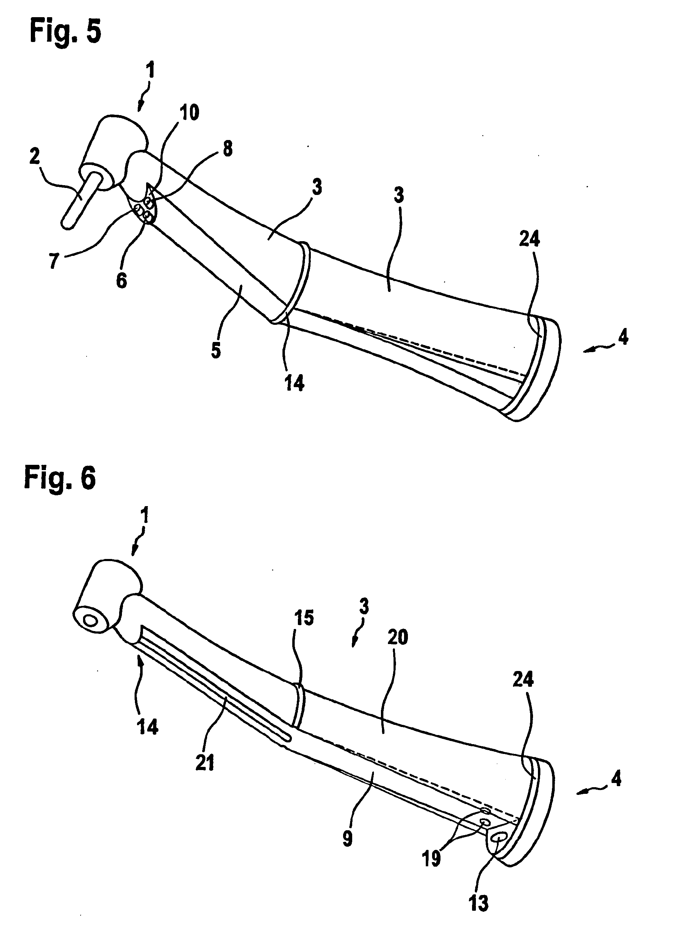

Die US 4,753,595 beschreibt ein zahnärztliches Handinstrument mit einer ersten Funktionseinheit bestehend aus einem Funktionsteil sowie einem Griffteil, welches an eine Anschlussarmatur anschließbar ist. Innerhalb des Griffteils sind Versorgungsleitungen für Wasser und Luft (a, b) sowie ein Lichtleiter angeordnet. Vorgenannte Medienträger treten aus dem Griffteil an der vorderen Stirnseite im Bereich eines wannenförmigen Gehäuseteils (siehe Figur 5) aus. Vorgenannte Medienträger bilden keine Funktionseinheit, die von der vorstehend definierten ersten Funktionseinheit bestehend aus Griffteil und Funktionsteil als zweite Funktionseinheit lösbar an der ersten Funktionseinheit angeordnet ist. Die Träger sind somit nicht an- und/oder abkuppelbar. Eine diesbezügliche Übergabestelle zu einer Anschlussarmatur ist demnach ebenfalls nicht vorgesehen.

Die EP 0 727 190 A1 beschreibt ebenfalls ein zahnärztliches Handinstrument mit einer ersten Funktionseinheit sowie einer als Schlauch ausgebildeten zweiten Funktionseinheit für das Medium Wasser. Die zweite Funktionseinheit bzw. der Schlauch ist jedoch an der ersten Funktionseinheit nicht lösbar verbunden. Die zweite Funktionseinheit liegt lediglich auf der ersten Funktionseinheit auf. Die zweite Funktionseinheit ist über eine eigene Anschlussarmatur mit der Versorgungsleitung verbunden. Übergabestellen zwischen einer Anschlussarmatur der ersten Funktionseinheit und dem Schlauch bestehen nicht.

Die US 6,102,695 beschreibt ein zahnärztliches Handinstrument gemäß EP 1 321 108 A1. Die US 6,102,695 beschreibt die Anordnung eines insoweit als zweite Funktionseinheit ausgebildeten, außen liegenden Lichtleiters, der lösbar mit der ersten Funktionseinheit verbunden ist, jedoch am ersten Funktionsteil nach hinten zum Versorgungsschlauch verläuft und sich dabei über die erste Funktionseinheit sowie über einen zwischen Versorgungsschlauch und erster Funktionseinheit angeordneten Motor hinaus zum Versorgungsschlauch hin erstreckt und dort an diesen kontaktiert ist.

Die GB 2 072 779 A beschreibt ein zahnärztliches Handinstrument mit einer ersten Funktionseinheit in Form eines Griffteils mit Funktionsteil mit einer Anschlussarmatur zum Anschluss an eine Antriebseinheit. Zur Übergabe eines Kühlmittels an eine medientragende Leitung ist im Bereich der Anschlussarmatur zusätzlich ein mit der medientragenden Leitung verbundenes Rohr am Griffteil angeordnet, welches mit einer an der Antriebseinheit angebrachten Hülse verbindbar ist. Allerdings verläuft die medientragende Leitung entweder innerhalb der ersten Funktionseinheit oder ohne ein weiter einhüllendes Gehäuse außen an der ersten Funktionseinheit entlang, wodurch sie beim Greifen des Griffteils stören kann.

Die DE 42 11 233 A1 beschreibt ein zahnärztliches Laser-Behandlungsgerät mit einer ersten Funktionseinheit, die einen Austritt für einen Laserstrahl an ihrem vorderen Ende und wenigstens eine, vorzugsweise zwei Medienleitungen beispielsweise für Wasser und Druckluft aufweist. Die Medienleitungen treten über eine zweite Funktionseinheit aus, die vorzugsweise als gemeinsamen Mediendüse in einem kleinen Abstand hinter dem Laserstrahl-Austritt angeordnet ist.

Der im Anspruch 1 angegeben Erfindung liegt die Aufgabe zugrunde, ein zahnärztliches Handinstrument derart auszubilden und anzuordnen, dass zum einen eine vielseitige Gestaltung mit unterschiedlichen anwendungsspezifischen Medienversorgungen möglich ist und zum anderen die Handhabung des Handinstruments, insbesondere der Wechsel desselben, gewährleistet ist.

Die Erfindung basiert auf den Gedanken, das Handinstrument funktional und hygienisch in zwei Komponenten aufzuteilen. Das zahnärztliche Handinstrument weist eine erste Funktionseinheit auf, welche einen Funktionsteil, einen Griffteil, eine Anschlußarmatur für den Anschluß eines Versorgungsteiles für Medien wie Luft, Wasser, elektrischer Strom, Licht und/oder Signale enthält sowie eine an der ersten Funktionseinheit lösbar angeordnete zweite Funktionseinheit, die mindestens einen Medienträger für medienübertragende Leitungen für Luft, Wasser, elektrischen Strom und/oder Licht enthält, wobei die erste Funktionseinheit eine sich längs der Funktinseinheit erstreckende Ausnehmung aufweist und die zweite Funktionseinheit als zumindest im Bereich der Handhaltung des Handinstruments dessen äußere Kontur fortsetzendes Formteil ausgebildet ist, das in die Ausnehmung einlegbar ist. Der Medienträger der zweiten Funktionseinheit steht im gekuppelten Zustand mit der Anschlussarmatur der ersten Funktionseinheit derart in Wirkverbindung, dass von der zweiten Funktionseinheit benötigte Medien zwischen der Anschlussarmatur der ersten Funktionseinheit und den Medienträgern der zweiten Funktionseinheit an jeweils einander entsprechend ausgebildeten Übergabestellen übertragbar sind.

Durch eine solche Aufteilung des Handinstruments in ein voll funktionsfähiges Basisteil einerseits und ein oder mehrere Medienträger andererseits, lassen sich für jeden Handstücktyp unterschiedliche Versionen hinsichtlich der Medien- und/oder Signalführung erstellen ohne dass das Basisteil geändert zu werden braucht. Ein weiterer Vorteil liegt darin, dass die die Medien- und/oder Signalleitungen führenden Teile zum Zwecke einer Reinigung, Sterilisation oder Austauschbarkeit vom Basisteil leicht abgenommen werden können.

Gemäß einer Weiterbildung kann die erste Funktionseinheit einen Antrieb bzw. Mittel zur Übertragung der Antriebsenergie umfassen.

Weitere Ausgestaltungen der Erfindung sind in den Unteransprüchen enthalten.

Anhand der Zeichnung werden mehrere Ausführungsbeispiele der Erfindung näher erläutert. Es zeigen:
Figuren 1 bis 4 in stark vereinfachter Darstellung vier unterschiedliche Handinstrumente gemäß der Erfindung, mit zugeordneten Versorgungsteilen,
Figur 5 das in Figur 1 gezeigte Handinstrument in einer schaubildlichen Darstellung,
Figur 6 das in Figur 1 gezeigte Handinstrument mit abgenommenem Medienträger, in einer schaubildlichen Darstellung,
Figur 7 den in Figur 1 gezeigten Medienträger alleine in einer schaubildlichen Darstellung,
Figur 8 den in Figur 7 gezeigten Medienträger aus einer anderen Sicht,
Figur 9 eine weitere Variante eines Medienträgers in einer schaubildlichen Darstellung,
Figur 10 das Kopfteil eines Handinstrumentes mit einer weiteren Ausprägung eines Medienträgers,
Figur 11 eine weitere Variante eines Medienträgers,
Figur 12 eine weitere Variante eines Medienträgers.
Figur 13 ein Handinstrument mit einer weiteren Ausprägung eines Medienträgers,
Figur 14 ein Handinstrument mit einer weiteren Variante eines Medienträgers,
Figur 15 einen Schnitt eines Handinstruments mit mehreren Medienträgern,
Figur 16 ein Handinstrument mit zwei Medienträgern in einer schaubildlichen Darstellung,
Figur 17 ein Handinstrument mit einem durchspülten Spalt zwischen Medienträger und Gehäuse.

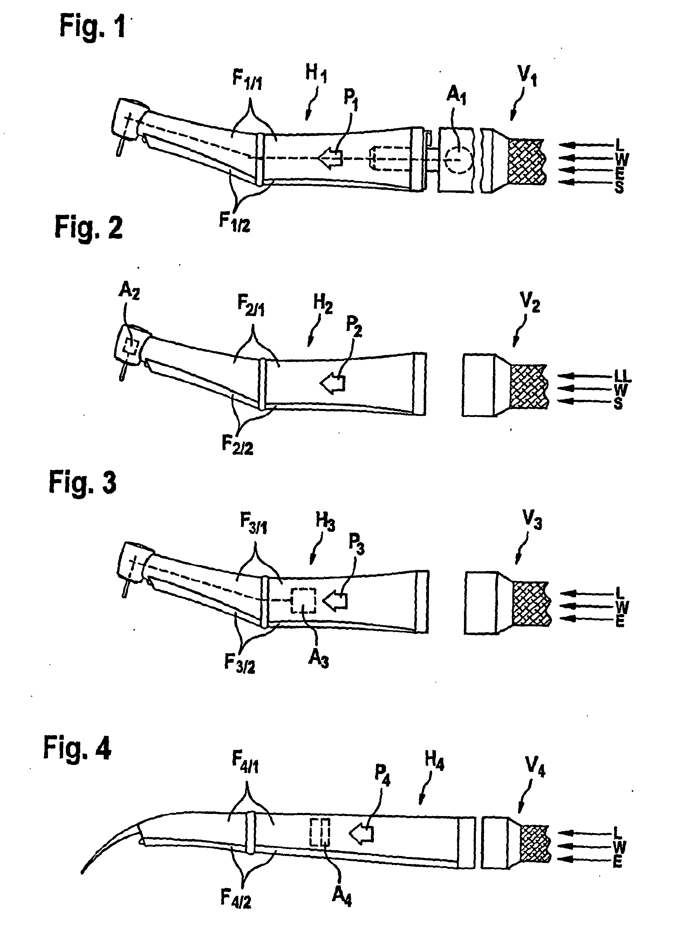

Die Figuren 1 bis 4 zeigen in einer stark vereinfachten, schematisierten Darstellung vier verschiedene Handinstrumente H1 bis H4, denen über Versorgungsschläuche V1 bis V4 Antriebsenergie P1 bis P4 für Antriebe A1 bis A4 zugeführt werden. Die Handinstrumente weisen jeweils eine erste Funktionseinheit.mit einem Funktionsteil 1 und einem Griffteil 3 auf. Als Funktionsteil wird derjenige Teil bezeichnet, an dem die eigentliche vom Benutzer gewünschte Funktion ausgeführt wird, also das Bohren, Belichten, Sprühen, (Pulver-) Strahlen usw. Am Griffteil wird das Handstück gehalten.

Bei dem Handinstrument H1 handelt es sich um ein so genanntes Hand- und Winkelstück, welches zum Antrieb eines am Kopfteil gelagerten Werkzeuges, hier zusammen das Funktionsteil bildend, dient und in bekannter Weise (in der Darstellung gestrichelt angedeutete) Triebwellen enthält, die von einem auf das Handinstrument aufsteckbaren elektromotorischen Antrieb A1 angetrieben werden. Die dem Handinstrument zugeführte Antriebsenergie P1 ist hier mechanische Energie.

Bei dem Handinstrument H2 handelt es sich um ein so genanntes Turbinenhandstück mit im Kopfteil angeordnetem Antrieb A2 (Turbine). Die Antriebsenergie P2 ist hier die zur Turbine führende Treibluft.

Das Handinstrument H3 ist ein Handinstrument mit im Griffteil angeordnetem Luftmotor A3. Die Antriebsenergie P3 ist hier die zum Luftmotor führende Treibluft.

Bei dem Handinstrument H4 handelt es sich um ein Handinstrument mit integriertem-Schwinger A4 (in der Regel ein Ultraschall- oder Luftschwinger) der die Werkzeugspitze in eine oszillierende oder ähnliche Bewegung .. versetzt. Die Antriebsenergie P4 ist hier elektrischer Strom oder Luft der an den Ultraschall- oder Luftschwinger A4 herangeführt wird.

Das zahnärztliche Werkzeug kann aber auch ein Spray sein. Dies bedeutet, dass Wasser und Luft in der ersten Funktionseinheit über das Werkzeug abgegeben werden. Ebenfalls möglich ist der Einsatz eines Pulverstrahls als Werkzeug. Hier wird über eine Austrittsdüse im Funktionsteil ein Gemisch aus Druckluft und Pulver abgegeben, gegebenenfalls unter Beimengung von Flüssigkeiten.

Das zahnärztliche Werkzeug kann ein Licht mit einer beliebigen Wellenlänge sein. Dieses Licht kann im Handstück selbst beispielsweise mittels Dioden oder Glühlampen erzeugt werden oder auch über die Anschlussarmatur zugeführt werden. Mit dem Licht können beispielsweise Aushärteprozesse beschleunigt werden.

Weiterhin kann das zahnärztliches Handinstrument als Werkzeug Laserlicht verwenden. In diesem Fall kann eine Arbeitsspitze für den Austritt des Laserlichts vorgesehen sein.

Schließlich kann das zahnärztliche Werkzeug eine Sonde mit oder ohne Antrieb sein, die beispielsweise die Tiefenmessung eines Wurzelkanals ermöglichen.

Den unterschiedlich aufgebauten und mit unterschiedlichen Antriebsenergien gespeisten Handinstrumenten werden über die Versorgungsschläuche V1 bis V4 weiterhin unterschiedliche Medien oder Signale zu- oder abgeführt. Diese in der Darstellung durch Pfeile gekennzeichneten Medien können unter anderem sein:
- Luft zur Bildung von Spray (L),
- Wasser zur Bildung von Spray (W),
- Elektrische Energie zum Betrieb einer Lampe (E),
- Licht aller Wellenlängen in Form eines Lichtleiters (LL), Laserlicht oder Bildinformationen.

Darüber hinaus können von einer extern eines Händinstruments angeordneten Steuereinheit Signale zum Handinstrument oder von diesem zurück in die Steuereinheit geführt werden. Diese Signale sind in der Darstellung mit (S) angedeutet. Insbesondere bei der Verwendung des Handinstruments an einer Standardschnittstelle sind zusätzliche externe Zuführungen von nicht an der Schnittstelle verfügbaren Medien erforderlich.

Die vier unterschiedlichen Handinstrumente weisen ein gemeinsames Aufbaukonzept auf. Dieses Aufbaukonzept sieht vor, das Kopfteil, einen zumindest die Handhaltung des Handinstruments gewährleistenden Teil des Griffkörpers und die Anschlußarmatur für den Anschluß des Versorgungsschlauches oder eines mit diesem gekuppelten Antriebsteils (wie am Beispiel von Figur 1 gezeigt) als autarke Funktionseinheit (Basisteil) auszubilden, und an dieses Basisteil mindestens einen Medienträger abnehmbar anzuordnen in dem insbesondere die Medien und/oder Signale führenden Leitungen enthalten sind.

In den Figuren 1 bis 4 ist das Basisteil, also die erste Funktionseinheit jeweils mit F1/1 für das Handinstrument H1, und die zweite Funktionseinheit für dieses Handinstrument mit F1/2 bezeichnet.

Entsprechendes gilt für die übrigen Handinstrumente H2 bis H4.

Einzelheiten über Aufbau und Gestaltung der beiden Funktionseinheiten werden nachfolgend anhand der Figuren 5 bis 8 am Beispiel des Handinstruments H1 erläutert.

Das Basisteil des Handinstruments wird gebildet von einem Kopfteil 1, an dem ein Werkzeug 2, hier ein in Rotation versetzbares Bohrwerkzeug, gelagert ist, einem Griffkörper 3 und einer Anschlußarmatur 4 für den Anschluß eines Versorgungsteiles (hier Versorgungsschlauch V1 mit Antriebsmotor A1). Es könnte aber auch ein oszillierendes Werkzeug oder eine feststehende Spitze mit Austritt von Laserlicht oder einer sonstigen Energieform zur Bearbeitung vorgesehen sein. Darüber hinaus können alle zahnarzttypischen Funktionen zur Anwendung kommen, wie Spray, Laserlicht, Licht zur Polymerisation, Scaler, Videokamera und anderes. Die jeweilige Funktion wird allgemein im Funktionsteil der ersten Funktionseinheit bereitgestellt.

Die Anschlußarmatur 4 ist hier symbolisch eingezeichnet, sie kann, je nach Ausführung des Handinstruments und des zugehörigen Versorgungsteiles, unterschiedliche gestaltet sein. Bei einem Schraubanschluß kann die Anschlußarmatur ein Gewinde enthalten, bei einer Dreh-Steckverbindung kann sie in den Griffkörper hinein ragende Kupplungsteile zur Aufnahme beispielsweise eines Kupplungszapfen (Fig.1) enthalten.

Der Griffkörper 3 enthält in seinem Inneren alle für den Antrieb bzw. für die Zufuhr der Energie zu dem Werkzeug notwendigen Teile, also beispielsweise Triebwellen und deren Lager, etc.

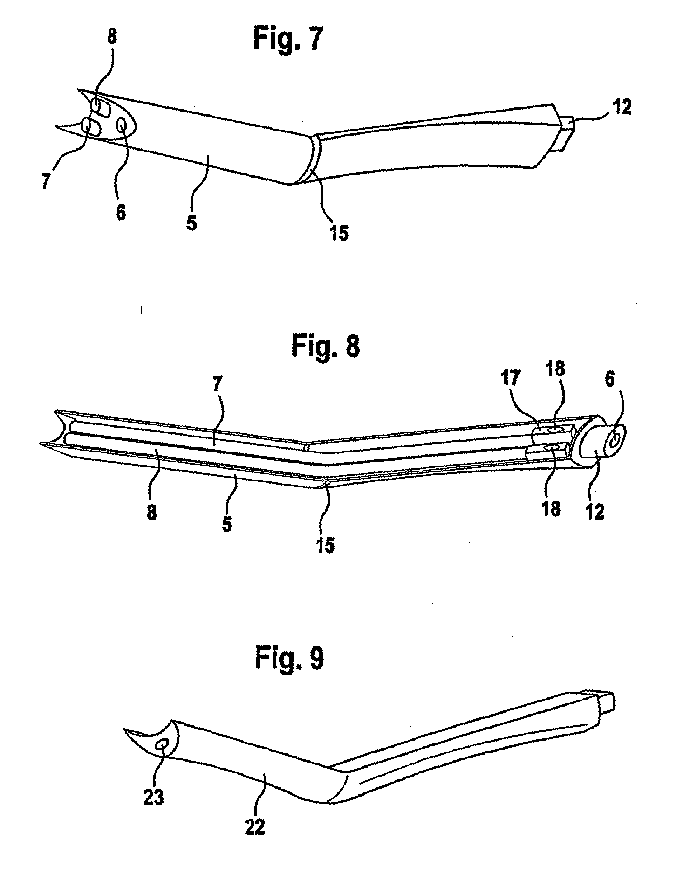

An der Unterseite des Griffkörpers 3 befindet sich ein als Medienträger dienendes Formteil 5, welches einen Lichtleiter 6 sowie zwei Röhrchen 7 und 8 für die Zufuhr von Spraywasser und Sprayluft beinhaltet. Zusammen bilden diese Teile die zweite Funktionseinheit. Das Formteil 5 ist so gestaltet, dass es zumindest im Bereich der Handhaltung des Handinstruments die äußere Kontur des Handinstruments fortsetzt. Zu diesem Zweck enthält das Gehäuse 20 des Griffkörpers 3 eine sich längs des Handinstruments erstreckende Ausnehmung 9, in die das Formteil 5 einlegbar ist (Figur 6). Im eingelegten Zustand (Figur 5) liegt ein Teil der dem Kopfteil zugewandten schrägen Stirnfläche 10 an einer Gegenfläche 11 des Kopfteils 1 an. Das andere Ende des Formteils 5 enthält einen Zapfen 12 (Figuren 7 und 8), der in eine entsprechend ausgebildete Ausnehmung 13 in der Anschlußarmatur 4 eingreift.

Die Halterung des Formteils 5 am Handinstrument erfolgt mittels eines auf den Griffkörper 3 aufschiebbaren Ringes 14, der in eine entsprechend ausgebildete Nut 15 im Formteil 5 und im Griffkörper 3 einrastet. Zur axialen Verspannung des Formteils 5 kann, zusätzlich oder alternativ, ein mit 24 angedeuteten Klemmring vorgesehen sein.

Alternativ zu diesem Halte- und/oder Klemmring ist auch eine Selbsthaltung des Formteils mittels beispielsweise einer Klemmrastung denkbar. Formteil und Basisteil können beispielsweise nach Art einer Schwalbenschwanzverbindung aneinander gekuppelt werden. Hierbei entsteht zumindest abschnittsweise ein Formschluß. Bei einem elastischen Formteil ist ein Einrasten in eine Nut vorstellbar.

Wie aus Figur 8, die das Formteil 5 in einer Draufsicht zeigt, erkennbar, ist das Formteil 5 wannenförmig ausgebildet. Die beiden Röhrchen 7 und 8 werden in der wannenförmigen Vertiefung des Formteils 5 durch Klemmteile 16 so gehalten, dass sie bei Bedarf leicht wieder herausgenommen werden können.

An dem dem Kopfteil abgewandten Ende sind die Röhrchen 7, 8 in einem Einsatzteil 17 gehalten, welches radiale Öffnungen 18 aufweist die mit im Griffkörper 3 angeordneten Öffnungen 19 korrespondieren, wodurch im gekuppelten Zustand eine Medienübergabe von der ersten Funktionseinheit, hier vom Griffkörper auf die zweite Funktionseinheit, hier das Formteil erfolgt.

Der Lichtleiter 6 ist im Formteil ebenfalls durch geeignete Halteelemente, insbesondere an den Enden (siehe Zapfen 12) fixiert.

Zur leichteren Fixierung der Röhrchen 7,8 und/oder des Lichtleiters (je nach Lage der Teile im Formteil 5) ist die Unterseite des Gehäuses 20 des Griffkörpers 3 mit einer in Längsrichtung verlaufenden Furche 21 versehen, dargestellt in Fig. 6, wodurch bei Zusammenwirken mit einem entsprechendem Vorsprung des Formteils das seitliche Verschieben des Formteils unter Krafteinwirkung verhindert wird. Anstelle der Furche 21 könnte im Gehäuse 20 auch ein Vorsprung vorgesehen werden und das Formteil eine Vertiefung aufweisen.

Alternativ zu der in Fig. 8 aufgezeigten Halterung der Medienleitungen ist auch eine Einbettung der Teile durch Verguß in einem geeigneten Füllstoff denkbar. Die Medien- und/oder Signalleitungen und/oder Anzeigeelemente 7, 8, 55 können auch mit dem Material des Formteils umspritzt sein.

Das in Fig. 6 dargestellte Gehäuse 20 ist als peripher geschlossenes Gehäuse ausgebildet, d. h. es ist umfangsseitig geschlossen und begrenzt auch die Unterseite mit der Ausnehmung 9. Alle Teile im Griffkörper 3 sind für sich geschützt untergebracht und können, unabhängig von den im Medienträger untergebrachten Teilen, separat gereinigt und gepflegt werden.

Das Handinstrument ist auch ohne den Medienträger voll funktionsfähig, d.h. es kann, wenn kein Medium gebraucht wird, ohne Medienträger benutzt werden. Insbesondere wegen einer besseren Handhaltung und Handhabung ist es aber in solchen Fällen vorteilhaft, einen der Form des gezeigten Formteils entsprechend ausgebildeten 'Blindkörper' vorzusehen und einzusetzen.

Die Figur 9 zeigt eine Variante zum Formteil 5. Das Formteil 22 ist hier vollständig aus einem Licht führenden Material hergestellt. Das Formteil kann zum Beispiel aus einem Glaskörper gebildet sein der, entsprechend der Lichteinspeisung bzw. des Lichtaustrittes, an beiden Stirnseiten entsprechend angeschliffen ist. Eine solche Variante ist dann von Vorteil, wenn bei einem Handinstrument Licht an der Behandlungsstelle benötigt wird und das Licht bereits in der Anschlußarmatur 4 oder im Versorgungsschlauch erzeugt wird. Der Glaskörper kann zudem nicht dargestellte Medienleitungen aufweisen.

Als Alternative zu einer solchen Ausführung ist mit Vorteil auch eine Ausprägung denkbar, bei der ein Lichtleiter 23 in einem Formteil eingelegt ist, welches aus einem nicht Licht leitendem Material, z. B. aus einem Kunststoffmaterial gefertigt ist. Der Lichtleiter 23 kann beispielsweise in einem Kunststoffteil eingespritzt sein. Eine solche Variante ist in Figur 9 gestrichelt angedeutet.

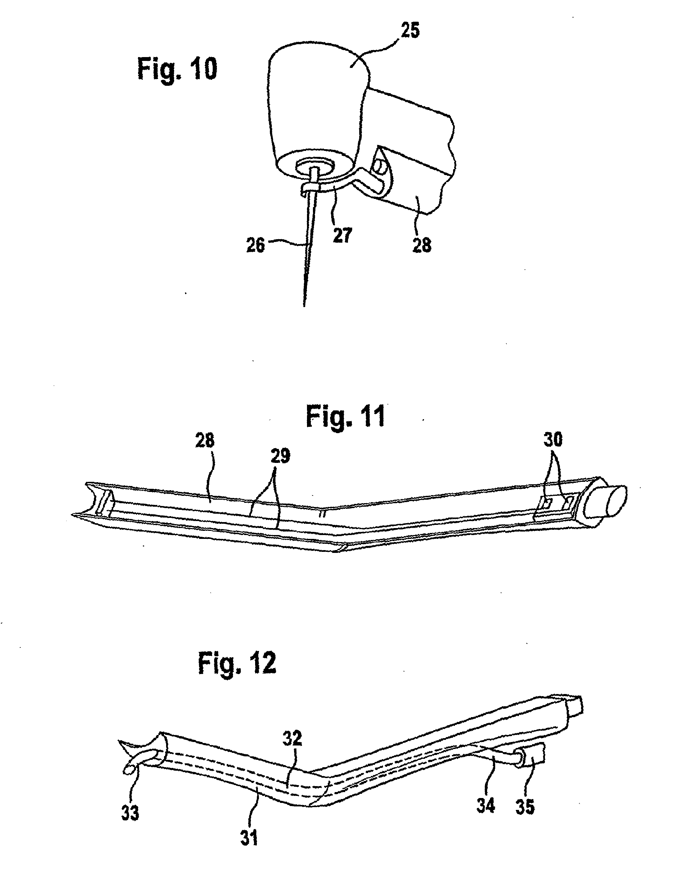

Die Figur 10 zeigt eine vorteilhafte Anwendungsvariante mit einem Handinstrument zur Messung der Tiefe eines Wurzelkanals eines Zahnes.

Im Kopfteil 25 dieses Handinstruments ist ein Werkzeug 26 gehaltert. Der hier nicht gezeigte Antrieb verschafft dem Werkzeug eine oszillierende, hin und her gehende oder rotierende Bewegung. In unmittelbarer Nähe des Werkzeugschaftes ist ein Sensorelement 27 angeordnet, mit dem die Bewegung des Werkzeuges in axialer. Richtung erfaßt werden kann. Das Sensorelement 27 kann hierzu direkt am Schaft des Werkzeuges anliegen.

Über das Sensorelement 27, hier als Kontakt ausgeführt, kann in Verbindung mit einem Patientenkontakt über das Werkzeug 26 beispielsweise eine kapazitive Messung durchgeführt werden. Die hieraus gewonnenen Signale werden über in einem Formteil 28 befindliche Signalleitungen 29 an das rückwärtige Ende geleitet. Die Signalleitungen enden in Sensorelementen 30, die im gekuppelten Zustand mit in der Anschlußarmatur des Handinstruments angeordneten Gegenkontakten korrespondieren und die Signale zu einer extern des Handinstruments angeordneten Steuereinheit zur weiteren Verwertung geleitet werden.

Anstelle des Sensorelements 27 kann auch die Bewegung des Werkzeuges erfasst werden. Eine solche vorteilhafte Variante in dieser oder ähnlichen Ausführung kann zur Erfassung der Drehzahl, Drehrichtung oder der Axialbewegung eines Werkzeuges vorgesehen sein. Der Sensor kann ein optoelektronischer oder akustischer Sensor sein, der in Abhängigkeit von beispielsweise der Drehzahl oder einer Hubfrequenz des Werkzeuges entsprechende Signale erzeugt, die in der erwähnten Weise einer Steuereinheit zur Auswertung und Anzeige zugeführt werden.

Die Figur 12 zeigt eine weitere vorteilhafte Variante eines Formteils. Das Formteil 31 enthält hier ein eingelegtes Röhrchen 32 , welches dem Kopfteil zugewandt ein gebogenes, auf die Behandlungsstelle gerichtetes Ende 33 aufweist. Das andere Ende 34 ist im hinteren Bereich nach außen geführt und für den Anschluß eines Schlauches 35 ausgeführt, über den aus einer externen Quelle Spülflüssigkeit, gegebenenfalls unter Zugabe eines Medikaments, zugeführt werden kann. Eine solche Variante ist mit Vorteil zur keimfreien Spülung von Wurzelkanälen bei einer Wurzelkanalaufbereitung einsetzbar.

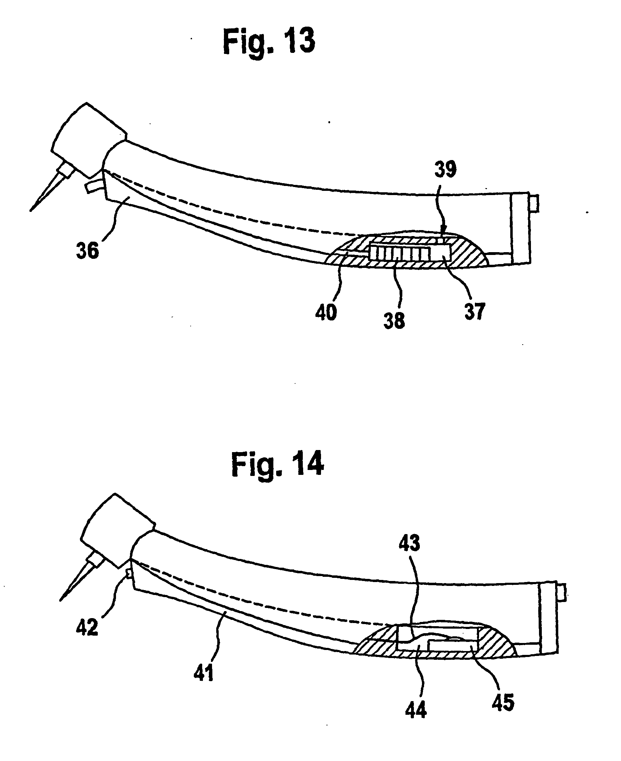

Eine demgegenüber elegantere Variante ist in Figur 13 dargestellt. Das Formteil 36 enthält hier ein Behältnis oder Reservoir 37 zur Aufnahme eines Medikaments, hier in Form von Medikamententabletten 38. Durch das Behältnis 37 wird Wasser geleitet, welches aus dem Versorgungsschlauch kommend über einen radialen Kanal 39 dem Behältnis zugeführt und über eine im Formteil befindliche Leitung 40 zum Kopfteil des Handinstruments geleitet wird. Um keimfreies Wasser zu bekommen, können im Behältnis 37 auch geeignete NaOCl-Tabletten eingelegt sein, die sich beim Durchlauf des Wassers auflösen. Selbstverständlich können auch andere Darreichungsformen wie Pulver, Gel, Flüssigkeiten zugemischt werden.

Über die Medienleitungen können insbesondere bei einer externen Einspeisung auch Vereisungsspray, Füllstoffe für den Wurzelkanal, Impfstoffe oder Medikamente zugeführt werden.

Eine andere ebenfalls vorteilhafte Variante eines Formteils mit integrierter Beleuchtungseinrichtung ist in Figur 14 dargestellt. Das Formteil 41 enthält hier ein auf die Behandlungsstelle ausgerichtetes Leuchtmittel. 42 in Form beispielsweise einer LED, welches über eine Leitung 43 mit einer in einer Ausnehmung 44 angeordneten Versorgungsquelle 45 in Form beispielsweise einer Knopfzelle für elektrische Energie verbunden ist. Das Formteil bildet hier eine autarke, von der sonstigen Versorgung des Handinstruments unabhängige Beleuchtungseinheit. Darüber hinaus kann an dem Formteil eine Schaltfunktion vorgesehen sein. Hier können Leuchtmittel jeder geeigneten Wellenlänge zum Einsatz gelangen.

Wie eingangs bereits angesprochen, kann es vorteilhaft sein, wenn das Handinstrument nicht nur einen Medienträger wie in den bisherigen Ausführungsbeispielen gezeigt aufweist, sondern mehrere Medienträger enthält, die zweckmäßigerweise dann am Umfang des Handinstruments gleichmäßig verteilt angeordnet sind.

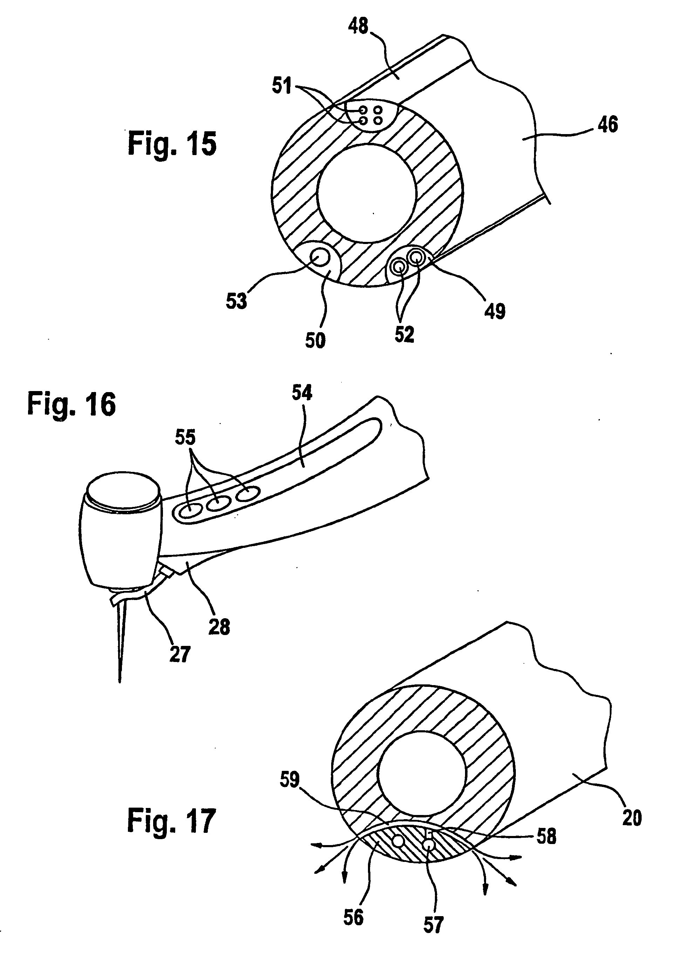

Eine solche Ausführung soll anhand der Figur 15 aufgezeigt werden. Die Figur 15 zeigt in stark vereinfachter Darstellung (ohne Innenteile) ein Basisteil 46 welches am Umfang drei Ausnehmungen enthält (die ähnlich der Ausnehmung 9 in Figur 6 ausgebildet sein können) in die drei unterschiedliche Medien führende Formteile 48, 49, 50 eingelegt sind. Das eine Formteil 48 enthält Leitungen 51 zur Zufuhr von elektrischem Strom oder zur Übertragung von Signalen, das andere Formteil 49 beinhaltet zwei Röhrchen 52 zur Zufuhr von Sprayluft und Spraywasser, das dritte Formteil 50 enthält einen Lichtleiter 53 zur Übertragung von Licht wie bereits beschrieben.

Ein Handinstrument dieser Ausprägung erlaubt es, individuelle, anwendungsspezifische Medienversorgungen vorzusehen ohne das Basisteil selbst verändern zu müssen. Auch hier werden im Einzelfall nicht vorgesehene oder nicht benötigte Medien durch Blindformteile abgedeckt bzw. verschlossen.

In Figur 16 ist eine Ausführung am Beispiel eines Handinstruments zur Wurzelkanalbehandlung aufgezeigt. Das Handinstrument enthält einerseits an seiner Unterseite das bereits in Figur 10 beschriebene Formteil 28 mit dem Sensorelement 27 zur Bestimmung der Länge eines Wurzelkanals, und an seiner Oberseite ein weiteres Formteil 54 in dem drei Anzeigemittel 55 (LED) angeordnet sind. Wie aus der Darstellung hervorgeht, erstreckt sich das Formteil nicht über die gesamte Länge des Griffkörpers, wie bei den zuvor gezeigten Ausführungsformen, sondern nur über einen kurzen Abschnitt des Griffkörpers. Die Anzeigemittel 55 sind mit dem Sensorelement 27 elektrisch verbunden und können beispielsweise die Eindringtiefe des Wurzelkanalinstruments anzeigen.

Jedes Formteil kann mit einer Kennung versehen sein, um die jeweilige Funktion deutlich zu machen. Diese Kennung kann durch farbliche Unterschiede oder durch Gestaltung der Oberflächenstruktur oder auf sonstige Weise erfolgen.

Gemäß der Erfindung kann ein zahnärztliches Chirurgie-Handstück bereitgestellt werden, bei welchem eine gute Reinigungsmöglichkeit dadurch gegeben ist, dass nur wenige in sich abgeschlossene Baugruppen oder Teile vorgesehen sind, die einfach zerlegbar und wieder montierbar sind. Dieses zahnärztliche Chirurgie-Handstück kann mit allen Komfort-Funktionen eines heute üblichen Handstücks wie Licht und Spray versehen werden, ohne dass die Reinigungsmöglichkeit darunter leidet.

Begünstigt wird dies dadurch, dass ein Medienträger 56 mit von einer druckbeaufschlagten Medienleitung 57 zum Gehäuse 20 abgehenden Spülöffnungen 58 versehen ist. Hierdurch entsteht ein Überdruck im Spalt 59 zwischen Medienträger 56 und Gehäuse 20, der zu einem Spülstrom führt und das Festsetzen von Kontaminierungen oder Keimen verhindert. Der Spalt kann an den äußeren Rändern abgedichtet sein, sodass unter Umständen bereits wenige Spülöffnungen ausreichen.

### Bezugszeichenliste

- 1 =: Kopfteil
- 2 =: Werkzeug
- 3 =: Griffkörper
- 4 =: Anschlußarmatur
- 5 =: Formteil (Medienträger)
- 6 =: Lichtleiter
- 7 =: Röhrchen
- 8 =: Röhrchen
- 9 =: Ausnehmung
- 10 =: Stirnfläche
- 11 =: Gegenfläche
- 12 =: Zapfen
- 13 =: Ausnehmung
- 14 =: Ring
- 15 =: Nut
- 16 =: Klemmteile
- 17 =: Einsatzteil
- 18 =: radiale Öffnungen
- 19 =: Übernameöffnungen
- 20 =: Gehäuse
- 21 =: Furche
- 22 =: Formteil
- 23 =: Lichtleiter
- 24 =: Klemmring
- 25 =: Kopfteil
- 26 =: Werkzeug
- 27 =: Sensorelement
- 28 =: Formteil
- 29 =: Signalleitungen
- 30 =: Signalleitungen
- 31 =: Formteil
- 32 =: Röhrchen
- 33 =: Röhrchenende
- 34 =: Röhrchenende
- 35 =: Schlauch
- 36 =: Formteil
- 37 =: Behältnis
- 38 =: Medikamententabletten
- 39 =: Kanal
- 40 =: Leitung
- 41 =: Formteil
- 42 =: Leuchtmittel
- 43 =: Leitung
- 44 =: Ausnehmung
- 45 =: Versorgungsquelle
- 46 =: Basisteil
- 47 =:
- 48 =: Formteile
- 49 =: Formteile
- 50 =: Formteil
- 51 =:
- 52 =: Röhrchen
- 53 =: Lichtleiter
- 54 =: Formteil
- 55 =: Anzeigeelemente
- 56 =: Medienträger
- 57 =: Medienleitung
- 58 =: Spülöffnung
- 59 =: Spalt

## Patentansprüche

1. Zahnärztliches Handinstrument, aufweisend eine erste Funktionseinheit (F1/1), welche einen Funktionsteil (1), einen Griffteil (3), eine Anschlußarmatur (4) für den Anschluß eines Versorgungsteiles (V1-V4) für Medien enthält sowie eine an der ersten Funktionseinheit (F1/1) lösbar angeordnete zweite Funktionseinheit (F1/2), die mindestens einen Medienträger (5, 22, 28, 31, 36, 41, 48, 49, 50, 54, 56) für medienübertragende Leitungen (6, 7, 8, 23, 29, 33, 40, 43, 51 bis 53) für Luft, Wasser, elektrischen Strom und/oder Licht enthält, wobei die erste Funktionseinheit (F1/1) eine sich längs der Funktionseinheit (F1/1) erstreckende Ausnehmung (9) aufweist, wobei die zweite Funktionseinheit (F1/2) als zumindest im Bereich der Handhaltung des Handinstruments dessen äußere Kontur fortsetzendes Formteil (5) ausgebildet ist, das in die Ausnehmung (9) einlegbar ist und wobei
der Medienträger der zweiten Funktionseinheit (F1/2) im gekuppelten Zustand mit der Anschlussarmatur (4) der ersten Funktionseinheit (F1/1) derart in Wirkverbindung steht, dass von der zweiten Funktionseinheit (F1/2) benötigte Medien zwischen der Anschlussarmatur (4) der ersten Funktionseinheit (F1/1) und dem mindestens einen Medienträger der zweiten Funktionseinheit (F1/2) an jeweils einander entsprechend ausgebildeten Übergabestellen (19) übertragbar sind.

2. Zahnärztliches Handinstrument nach Anspruch 1, wobei die erste Funktionseinheit (F1/1) und die zweite Funktionseinheit (F1/2) Haltemittel (11, 13, 14) für eine lösbare Verbindung aufweisen.

3. Zahnärztliches Handinstrument nach einem der Ansprüche 1 oder 2, wobei die erste Funktionseinheit (F1/1) ein umfangsseitig geschlossenes Außengehäuse (20) mit einer zum Innern des Außengehäuses hin zurückversetzte Ausnehmung (9) zur zumindest stückweisen Aufnahme des Medienträgers (5, 22, 28, 31, 36, 41, 48, 49, 50, 54, 56) aufweist und wobei der mindestens eine Medienträger (5, 22, 28, 31, 36, 41, 48, 49, 50, 54) so ausgebildet ist, dass er im gekuppelten Zustand im wesentlichen die Umfangskontur des Griffkörpers (3, 46) fortsetzt.

4. Zahnärztliches Handinstrument nach einem der Ansprüche 1 bis 3, wobei der mindestens eine Medienträger der zweiten Funktionseinheit (F1/2) eine von der Anschlußarmatur (4) unabhängige Übergabestelle für von der zweiten Funktionseinheit (F1/2) benötigten Medien und/oder Signale aufweist.

5. Zahnärztliches Handinstrument nach einem der Ansprüche 1 bis 4, wobei die erste Funktionseinheit (F1/1) an ihrem einen Ende ein Kopfteil (1) mit Aufnahmemitteln für ein zahnärztliches Werkzeug (2, 26) und an ihrem anderen Ende die Anschlußarmatur (4) sowie Mittel zur Übertragung von Energie (P1) und/oder Signalen an das und/oder von dem Werkzeug enthält und eine in Bezug auf das Werkzeug und die Handhaltung eigenständige Einheit ist.

6. Zahnärztliches Handinstrument nach Anspruch 5, wobei die erste Funktionseinheit (F1/1) einen Antrieb (A1) für ein zahnärztliches Werkzeug (2, 26) umfaßt.

7. Zahnärztliches Handinstrument nach Anspruch 6, wobei das Werkzeug rotierend oder oszillierend ausgebildet ist.

8. Zahnärztliches Handinstrument nach Anspruch 6, wobei das zahnärztliche Werkzeug (2, 26) ein Spray ist.

9. Zahnärztliches Handinstrument nach Anspruch 6, wobei das zahnärztliche Werkzeug (2, 26) ein Licht mit einer beliebigen Wellenlänge ist.

10. Zahnärztliches Handinstrument nach Anspruch 6, wobei das zahnärztliche Werkzeug (2, 26) Laserlicht ist.

11. Zahnärztliches Handinstrument nach Anspruch 6, wobei das zahnärztliche Werkzeug (2, 26) eine Sonde mit oder ohne Antrieb ist.

12. Zahnärztliches Handinstrument nach einem der Ansprüche 1 bis 11, wobei die zweite Funktionseinheit (F1/2) mehrere am Umfang des Griffteils angeordnete Medienträger (48, 49, 50) umfaßt.

13. Zahnärztliches Handinstrument nach einem der Ansprüche 1 bis 12, wobei der mindestens eine Medienträger (5, 22, 28, 31, 36, 41, 48, 49, 50, 54, 56) als wannenförmig ausgebildetes Formteil.ausgeführt ist und in dessen Vertiefung Medien- und/oder Signalleitungen und/oder Anzeigeelemente (6, 7, 8, 23, 29, 30, 32, 33, 39, 40, 43, 51, 52, 53, 55) gehaltert sind.

14. Zahnärztliches Handinstrument nach Anspruch 13, wobei das Formteil Mittel (16) zur lösbaren Halterung der Medien- und/oder Signalleitungen und/oder Anzeigeelemente (7, 8, 55), vorzugsweise in Form von Klemmelementen (16) enthalten.

15. Zahnärztliches Handinstrument nach einem der Ansprüche 1 bis 14, wobei die Leitungen (7, 8) für Medien im mindestens einen Medienträger (5) an dem dem Funktionsteil (1) abgewandten Ende in einem Einsatzteil (17) mit radialer Ankoppelung an Medienzufuhrleitungen im Anschlußteil (4) gefaßt sind.

16. Zahnärztliches Handinstrument nach einem der Ansprüche 1 bis 15, wobei der mindestens eine Medienträger (5) an seinem dem Funktionsteil (1) abgewandten Ende einen vorstehenden Zapfen (12) aufweist, an dessen Stirnseite zumindest eine Leitung (6) endet, und wobei die Anschlußarmatur (4) der ersten Funktionseinheit (F1/1) eine entsprechend ausgebildete Ausnehmung (13) aufweist, in die der Zapfen (12) einführbar ist, wobei im eingeführten Zustand eine Wirkverbindung im Sinne einer Übertragung der Medien und/oder Signale hergestellt ist.

17. Zahnärztliches Handinstrument nach einem der Ansprüche 1 bis 16, wobei der mindestens eine Medienträger (28) dem Kopfteil (1, 25) benachbart Kontakt- oder Sensormittel (27) enthält, welche durch den Kontakt mit einem Werkzeug (26) oder berührungslos Signale aufnehmen, die über im Medienträger angeordnete Signalleitungen (29) geleitet werden, deren Enden mit Kontakten (30) versehen sind, die im gekuppelten Zustand mit Gegenkontakten in der Anschlußarmatur (4) korrespondieren.

18. Zahnärztliches Handinstrument nach Anspruch 17, wobei Sensormittel (27) vorgesehen sind, welche die Bewegung, insbesondere eine Drehbewegung oder eine Drehrichtung, eines im Funktionsteil (1, 25) gelagerten Werkzeuges (2, 26) erfassen.

19. Zahnärztliches Handinstrument nach einem der Ansprüche 1 bis 18, wobei der mindestens eine Medienträger (5, 28, 31, 36, 41, 48, 49, 50, 54, 56) zumindest teilelastisch ausgebildet ist.

20. Zahnärztliches Handinstrument nach einem der Ansprüche 1 bis 19, wobei der mindestens eine Medienträger (5, 28, 31, 36, 41, 48, 49, 50, 54, 56) als einmal verwendbares Teil ausgebildet ist.

21. Zahnärztliches Handinstrument nach einem der Ansprüche 1 bis 20, wobei der mindestens eine Medienträger (5, 22, 28, 31, 36, 41, 48, 49, 50, 54, 56) alternativ als Blindteil ausgebildet ist.

22. Zahnärztliches Handinstrument nach einem der Ansprüche 1 bis 10, wobei der mindestens eine Medienträger (22) aus einem Licht leitenden Material besteht.

23. Zahnärztliches Handinstrument nach einem der Ansprüche 1 bis 22, wobei der mindestens eine Medienträger (31) ein Leitungsrohr enthält, dessen dem Kopfteil abgewandtes Ende (34) für den Anschluß eines externen Schlauches (35) zur Zufuhr einer Spülflüssigkeit ausgeführt ist.

24. Zahnärztliches Handinstrument nach einem der Ansprüche 1 bis 23, wobei der mindestens eine Medienträger (5) mittels eines auf den Griffkörper (3) aufschiebbaren Halteringes (14) befestigbar ist.

25. Zahnärztliches Handinstrument nach einem der Ansprüche 1 bis 23, wobei der mindestens eine Medienträger (5) mittels einer im Bereich des Funktionsteils (1) vorgesehenen Gegenfläche (11) und andererseits an einem dem Funktionsteil (1) abgewandten Ende des Griffkörpers (3) angeordneten Klemmring (24) befestigbar ist.

26. Zahnärztliches Handinstrument nach einem der Ansprüche 1 bis 24, wobei der mindestens eine Medienträger (5, 22, 28, 31, 36, 41, 48, 49, 50, 54, 56) und Griffteil (3) insbesondere im Bereich der Ausnehmung (9) Mittel zur Selbsthaltung enthalten.

27. Zahnärztliches Handinstrument nach einem der Ansprüche 1 bis 26, wobei der mindestens eine Medienträger (5, 22, 28, 31, 36, 41, 48, 49, 50, 54, 56) so ausgebildet ist, dass er im gekuppelten Zustand zumindest abschnittsweise die Querschnittskontur des Griffkörpers (3, 46) fortsetzt.

28. Zahnärztliches Handinstrument nach einem der Ansprüche 1 bis 27, wobei der mindestens eine Medienträger (36) ein Behältnis (37) zur Aufnahme einer Mischsubstanz sowie Leitungen (39, 40) zur Zufuhr und Durchleitung der Flüssigkeit in das bzw. durch das Behältnis (37) enthält.

29. Zahnärztliches Handinstrument nach einem der Ansprüche 1 bis 28, wobei der mindestens eine Medienträger (41) eine Aufnahme (44) für eine elektrischen Versorgungsquelle (45) sowie Leitungen(43) zur Speisung eines stirnseitig des Medienträgers (41) angeordneten Leuchtmittels (42) aus einer im Medienträger angeordneten Versorgungsquelle (45) enthält.

30. Zahnärztliches Handinstrument nach einem der Ansprüche 1 bis 29, wobei ein erster Medienträger (54) vorgesehen ist, welcher Anzeigemittel (55) enthält, die mit Sensormitteln (27) zusammenwirken, wobei die Sensormittel gegebenenfalls in einem zweiten Medienträger (28) angeordnet sind.

31. Zahnärztliches Handinstrument nach einem der Ansprüche 1 bis 30, wobei ein Medienträger (56) mit von einer druckbeaufschlagten Medienleitung (57) zum Gehäuse (20) abgehenden Spülöffnungen (58) versehen ist.

## Claims

1. A dental hand instrument, exhibiting a first functional unit (F1/1) including a functional part (1), a handle (3), a connector (4) for the attachment of a supply element (V1-V4) for media, and a second functional unit (F1/2) releasably attached to said first functional unit (F1/1) and including at least one media carrier (5, 22, 28, 31, 36, 41, 48, 49, 50, 54, 56) for media-transporting lines (6, 7, 8, 23, 29, 33, 40, 43, 51 to 53) for air, water, electric current, and/or light, wherein said first functional unit (F1/1) comprises a recess (9) extending along said functional unit (9), wherein said second functional unit (F1/2) is in the form of a shaped part (5) which is a continuation, at least in the region of the handle of said hand instrument, of the outer contour of said handle, which shaped part (5) can be inserted into said recess (9), and wherein, in the coupled state, said media carrier in said second functional unit (F1/2) communicates with said connector (4) in said first functional unit (F1/1) in such a manner that media required by said second functional unit (F1/2) can be transported between said connector (4) in said first functional unit (F1/1) and said media carriers in said second functional unit (F1/2) via mating points of interconnection (19).

2. The dental hand instrument as defined in claim 1, wherein said first functional unit (F1/1) and said second functional unit (F1/2) have retainers (11, 13, 14) adapted for a releasable connection.

3. The dental hand instrument as defined in claim 1 and claim 2, wherein said first functional unit (F1/1) has a peripherally closed outer housing (20) having a recess (9) oriented toward the interior of said outer housing and adapted for at least partial accommodation of said media carrier (5, 22, 28, 31, 36, 41, 48, 49, 50, 54, 56) and wherein the at least one media carrier (5, 22, 28, 31, 36, 41, 48, 49, 50, 54) is designed such that it substantially forms, in the coupled state, a continuation of the peripheral shape of said handle (3, 46).

4. The dental hand instrument as defined in any one of claims 1 to 3, wherein said media carrier in said second functional unit (F1/2) has, independently of said connector (4), a point of interconnection for media and/or signals required by said second functional unit (F1/2).

5. The dental hand instrument as defined in any one of claims 1 to 4, wherein said first functional unit (F1/1) has at one end thereof a head piece (1) having accommodating means for a dental tool (2, 26) and has at the other end thereof said connector (4) and means for the transfer of energy (P1) and/or signals to said tool and/or from said tool and is a unit that is independent of said tool and said handle.

6. The dental hand instrument as defined in claim 5, wherein said first functional unit (F1/1) comprises a drive (A1) for a dental tool (2, 26).

7. The dental hand instrument as defined in claim 6, wherein said tool is adapted to rotate or oscillate.

8. The dental hand instrument as defined in claim 6, wherein said dental tool (2, 26) is a spray.

9. The dental hand instrument as defined in claim 6, wherein said dental tool (2, 26) is a light of arbitrary wavelength.

10. The dental hand instrument as defined in claim 6, wherein said dental tool (2, 26) is laser light.

11. The dental hand instrument as defined in claim 6, wherein said dental tool (2, 26) is a probe with or without a drive.

12. The dental hand instrument as defined in any one of claims 1 to 11, wherein said second functional unit (F1/2) comprises a plurality of media carriers (48, 49, 50) disposed on the periphery of said handle.

13. The dental hand instrument as defined in any one of claims 1 to 12, wherein the at least one media carrier (5, 22, 28, 31, 36, 41, 48, 49, 50, 54, 56) is in the form of a boat-shaped part in the recesses of which media and/or signal lines and/or display units (6, 7, 8, 23, 29, 30, 32, 33, 39, 40, 43, 51, 52, 53, 55) are mounted.

14. The dental hand instrument as defined in claim 13, wherein said shaped part has means (16) for releasably retaining said media and/or signal lines and/or display units (7, 8, 55), preferably in the form of clamping elements (16).

15. The dental hand instrument as defined in any one of claims 1 to 14, wherein said lines (7, 8) for media in at least one media carrier (5) are mounted at the end remote from said functional part (1) in an insert (17) allowing radial coupling thereof to the media feedlines in said connector (4).

16. The dental hand instrument as defined in any one of claims 1 to 15, wherein the at least one media carrier (5) has, at its end remote from said functional part (1), a projecting trunnion (12), at the end face of which at least one line (6) terminates, and wherein said connector (4) in said first functional unit (F1/1) has an appropriately shaped recess (13) into which said trunnion (12) can be inserted, and in the inserted state communication in terms of the transference of media and/or signals is established.

17. The dental hand instrument as defined in any one of claims 1 to 16, wherein the at least one media carrier (28) contains, adjacent to said head piece (1, 25), contacting or sensing means (27) which record signals caused by contact with a tool (26) or by contactless transmission, which signals are passed through signal lines (29) disposed in said media carrier and provided at their ends with contacts (30) which in the coupled state mate with corresponding contacts in said connector (4).

18. The dental hand instrument as defined in claim 17, wherein sensing means (27) are provided which are adapted to detect motion, particularly rotary motion, or the direction of rotation, of a tool (2, 26) mounted in said functional part (1, 25).

19. The dental hand instrument as defined in any one of claims 1 to 18, wherein the at least one media carrier (5, 28, 31, 36, 41, 48, 49, 50, 54, 56) is at least partially resilient.

20. The dental hand instrument as defined in any one of claims 1 to 19, wherein the at least one media carrier (5, 28, 31, 36, 41, 48, 49, 50, 54, 56) is a use-once-only part.

21. The dental hand instrument as defined in any one of claims 1 to 20, wherein the at least one media carrier (5, 22, 28, 31, 36, 41, 48, 49, 50, 54, 56) is alternatively in the form of a dummy part.

22. The dental hand instrument as defined in any one of claims 1 to 10, wherein the at least one media carrier (22) is of a light-conducting material.

23. The dental hand instrument as defined in any one of claims 1 to 22, wherein the at least one media carrier (31) contains a duct whose end (34) remote from said head piece is designed for attachment of an external flexible tube (35) for the purpose of supplying a rinsing liquid.

24. The dental hand instrument as defined in any one of claims 1 to 23, wherein the at least one media carrier (5) is adapted to be attached by means of a retaining ring (14) that is capable of being pushed onto said handle (3).

25. The dental hand instrument as defined in any one of claims 1 to 23, wherein the at least one media carrier (5) can be attached by means of a mating surface (11) provided in the region of said functional part (1) and by a locking ring (24) disposed at that end of said handle (3) which is remote from said functional part (1).

26. The dental hand instrument as defined in any one of claims 3 to 24, wherein the at least one media carrier (5, 22, 28, 31, 36, 41, 48, 49, 50, 54, 56) and handle (3) comprise self-retaining means, particularly in the region of said recess (9).

27. The dental hand instrument as defined in any one of claims 1 to 26, wherein the at least one said media carrier (5, 22, 28, 31, 36, 41, 48, 49, 50, 54, 56) is shaped such that, in the coupled state, it forms, at least in part, a continuation of the cross-sectional contours of said handle (3, 46).

28. The dental hand instrument as defined in any one of claims 1 to 27, wherein the at least one media carrier (36) includes a container (37) for the accommodation of a mixture of substances and also lines (39, 40) for feeding said liquid into said container (37) and allowing the passage thereof through said container (37).

29. The dental hand instrument as defined in any one of claims 1 to 28, wherein the at least one said media carrier (41) has accommodating means (44) for an electrical source of energy (45) and also conductors (43) for supplying electrical energy to an illuminant (42), disposed at the end of said media carrier (41), from a source of energy (45) included in said media carrier.

30. The dental hand instrument as defined in any one of claims 1 to 29, wherein a first media carrier (54) is provided which contains an indicator (55) adapted to cooperate with sensing means (27), which are optionally disposed in a second media carrier (28).

31. The dental hand instrument as defined in any one of claims 1 to 30, wherein a media carrier (56) is provided with rinsing orifices (58) extending from a pressurized media line (57) to said housing (20).

## Revendications

1. Instrument dentaire à main, comportant une première unité fonctionnelle (F1/1), laquelle contient une partie fonctionnelle (1), une partie de poignée (3), une armature de raccordement (4) destinée au raccordement d'une partie d'alimentation (V1-V4) pour des milieux, ainsi qu'une seconde unité fonctionnelle (F1/2) disposée de manière amovible sur la première unité fonctionnelle (F1/1), ladite seconde unité contenant au moins un support de milieu (5, 22, 28, 31, 36, 41, 48, 49, 50, 54, 56) pour des conduites transmettant le milieu (6, 7, 8, 23, 29, 33, 40, 43, 51 à 53) pour l'air, l'eau, le courant électrique et/ou la lumière,
sachant que
la première unité fonctionnelle (F1/1) présente un creux (9) s'étendant le long de l'unité fonctionnelle (F1/1), sachant que la seconde unité fonctionnelle (F1/2) est formée comme une pièce moulée (5) prolongeant le contour extérieur de l'instrument à main au moins au niveau de la tenue dans la main, qui peut être placé dans le creux (9) et sachant que
le support de milieu de la seconde unité fonctionnelle (F1/2) à l'état couplé est en liaison active avec l'armature de raccordement (4) de la première unité fonctionnelle (F1/1) de telle manière que les milieux nécessaires à la seconde unité fonctionnelle (F1/2) entre l'armature de raccordement (4) de la première unité fonctionnelle (F1/1) et l'au moins un support de milieu de la seconde unité fonctionnelle (F1/2) peuvent être transmis des points de transfert (19) formés respectivement de manière correspondante les uns par rapport aux autres.

2. Instrument dentaire à main selon la revendication 1, dans lequel la première unité fonctionnelle (F1/1) et la seconde unité fonctionnelle (F1/2) comportent des moyens de maintien (11, 13, 14) pour une liaison amovible.

3. Instrument dentaire à main selon l'une des revendications 1 ou 2, dans lequel la première unité fonctionnelle (F1/1) comporte un boîtier extérieur (20) fermé côté pourtour, muni d'un creux (9) en retrait vers l'intérieur du boîtier extérieur en vue du logement au moins pièce par pièce du support de milieu (5, 22, 28, 31, 36, 41, 48, 49, 50, 54, 56) et sachant que l'au moins un support de milieu (5, 22, 28, 31, 36, 41, 48, 49, 50, 54) est conçu de telle manière qu'il prolonge à l'état couplé au moins par sections le contour périphérique du corps de poignée (3, 46).

4. Instrument dentaire à main selon l'une des revendications 1 à 3, dans lequel l'au moins un support de milieu de la seconde unité fonctionnelle (F1/2) comporte un point de transfert indépendant de l'armature de raccordement (4) pour les milieux et/ou les signaux nécessaires à la seconde unité fonctionnelle (F1/2).

5. Instrument dentaire à main selon l'une des revendications 1 à 4, dans lequel la première unité fonctionnelle (F1/1) contient à l'une de ses extrémités une partie de tête (1) munie de moyens de réception pour un outil dentaire (2, 26), et à l'autre extrémité l'armature de raccordement (4) ainsi que des moyens pour la transmission d'énergie (P1) et/ou de signaux à et/ou par l'outil, et est une unité autonome par rapport à l'outil et la tenue dans la main.

6. Instrument dentaire à main selon la revendication 5, dans lequel la première unité fonctionnelle (F1/1) comprend un entraînement (A1) pour un outil dentaire (2, 26).

7. Instrument dentaire à main selon la revendication 6, dans lequel l'outil est conçu rotatif ou oscillant.

8. Instrument dentaire à main selon la revendication 6, dans lequel l'outil dentaire (2, 26) est un spray.

9. Instrument dentaire à main selon la revendication 6, dans lequel l'outil dentaire (2, 26) est une lumière à longueur d'onde quelconque.

10. Instrument dentaire à main selon la revendication 6, dans lequel l'outil dentaire (2, 26) est une lumière à laser.

11. Instrument dentaire à main selon la revendication 6, dans lequel l'outil dentaire (2, 26) est une sonde avec ou sans entraînement.

12. Instrument dentaire à main selon l'une des revendications 1 à 11, dans lequel la seconde unité fonctionnelle (F1/2) comprend plusieurs supports de milieu (48, 49, 50) disposés sur le pourtour de la partie de poignée.

13. Instrument dentaire à main selon l'une des revendications 1 à 12, dans lequel l'au moins un support de milieu (5, 22, 28, 31, 36, 41, 48, 49, 50, 54, 56) est conçu comme une pièce moulée en forme de cuvette, et des conduites de milieu et/ou des lignes de signaux et/ou des éléments d'affichage (6, 7, 8, 23, 29, 30, 32, 33, 39, 40, 43, 51, 52, 53, 55) sont maintenus dans la cavité dudit support de milieu.

14. Instrument dentaire à main selon la revendication 13, dans lequel la pièce moulée contient des moyens (16) pour le maintien amovible des conduites de milieu et/ou des lignes de signaux et/ou des éléments d'affichage (7, 8, 55), de préférence sous la forme d'éléments de serrage (16).

15. Instrument dentaire à main selon l'une des revendications 1 à 14, dans lequel les conduites (7, 8) pour les milieux dans au moins un support de milieu (5) sont comprises à l'extrémité opposée à la partie fonctionnelle (1) dans un insert (17) avec accouplement radial aux conduites d'alimentation de milieu dans la pièce de raccordement (4).

16. Instrument dentaire à main selon l'une des revendications 1 à 15, dans lequel l'au moins un support de milieu (5) comporte à son extrémité opposée à la partie fonctionnelle (1) un téton saillant (12), au niveau de la face frontale duquel se termine au moins une conduite (6), et dans lequel l'armature de raccordement (4) de la première unité fonctionnelle (F1/1) comporte un creux (13) formé de manière correspondante, dans lequel le téton (12) peut être introduit, à l'état introduit une liaison active étant établie au sens d'une transmission des milieux et/ou des signaux.

17. Instrument dentaire à main selon l'une des revendications 1 à 16, dans lequel l'au moins un support de milieu (28), contigu à la partie de tête (1, 25), contient des moyens de contact ou de détection (27), lesquels reçoivent, par le contact avec un outil (26) ou sans contact, des signaux qui sont acheminés par l'intermédiaire des lignes de signaux (29) disposées dans le support de milieu, les extrémités desdites lignes étant pourvues de contacts (30) qui à l'état couplé correspondent avec des contacts opposés dans l'armature de raccordement (4).

18. Instrument dentaire à main selon la revendication 17, dans lequel il est prévu des moyens de détection (27), lesquels détectent le mouvement, en particulier un mouvement rotatif ou un sens de rotation, d'un outil (2, 26) logé dans la partie fonctionnelle (1, 25).

19. Instrument dentaire à main selon l'une des revendications 1 à 18, dans lequel l'au moins un support de milieu (5, 28, 31, 36, 41, 48, 49, 50, 54, 56) est conçu au moins en partie de manière élastique.

20. Instrument dentaire à main selon l'une des revendications 1 à 19, dans lequel l'au moins un support de milieu (5, 28, 31, 36, 41, 48, 49, 50, 54, 56) est conçu comme pièce à usage unique.

21. Instrument dentaire à main selon l'une des revendications 1 à 20, dans lequel l'au moins un support de milieu (5, 22, 28, 31, 36, 41, 48, 49, 50, 54, 56) est conçu en variante comme pièce borgne.

22. Instrument dentaire à main selon l'une des revendications 1 à 10, dans lequel l'au moins un support de milieu (22) se compose d'un matériau guidant la lumière.

23. Instrument dentaire à main selon l'une des revendications 1 à 22, dans lequel l'au moins un support de milieu (31) contient un tube conducteur, dont l'extrémité (34) opposée à la partie de tête est conçue pour l'armature de raccordement d'un tuyau flexible externe (35) en vue de l'alimentation d'un liquide de rinçage.

24. Instrument dentaire à main selon l'une des revendications 1 à 23, dans lequel l'au moins un support de milieu (5) peut être fixé au moyen d'une bague de blocage (14) pouvant être enfilée sur le corps de poignée (3).

25. Instrument dentaire à main selon l'une des revendications 1 à 23, dans lequel l'au moins un support de milieu (5) peut être fixé au moyen d'une surface opposée (11) prévue dans la zone de la partie fonctionnelle (1) et d'autre part au moyen d'une bague de serrage (24) disposée à une extrémité du corps de poignée (3) opposée à la partie fonctionnelle (1).

26. Instrument dentaire à main selon l'une des revendications 1 à 24, dans lequel l'au moins un support de milieu (5, 22, 28, 31, 36, 41, 48, 49, 50, 54, 56) et la partie de poignée (3) contiennent des moyens à auto-maintien, en particulier dans la zone du creux (9).

27. Instrument dentaire à main selon l'une des revendications 1 à 26, dans lequel l'au moins un support de milieu (5, 22, 28, 31, 36, 41, 48, 49, 50, 54, 56) est conçu de telle manière qu'il prolonge à l'état couplé au moins par sections le contour de section transversale du corps de poignée (3, 46).

28. Instrument dentaire à main selon l'une des revendications 1 à 27, dans lequel l'au moins un support de milieu (36) contient un récipient (37) pour la réception d'une substance mixte ainsi que des conduites (39, 40) en vue de l'alimentation et du passage de liquide dans et/ou à travers le récipient (37).

29. Instrument dentaire à main selon l'une des revendications 1 à 28, dans lequel l'au moins un support de milieu (41) contient un logement (44) pour une source d'alimentation électrique (45) ainsi que des lignes (43) pour l'alimentation d'un moyen d'éclairage (42) disposé côté frontal du support de milieu (41), constitué d'une source d'alimentation (45) agencée dans le support de milieu.

30. Instrument dentaire à main selon l'une des revendications 1 à 29, dans lequel un premier support de milieu (54) est prévu, lequel contient des moyens d'affichage (55) qui coopèrent avec des moyens de détection (27), les moyens de détection étant disposés, le cas échéant, dans un second support de milieu (28).

31. Instrument dentaire à main selon l'une des revendications 1 à 30, dans lequel un support de milieu (56) est pourvu d'ouvertures de rinçage (58) partant d'une conduite de milieu (57) mise sous pression en direction du boîtier (20).
